(19) Europäisches Patentamt European Patent Office Office européen des brevets

(11) **EP 4 570 408 A1**

(12) **EUROPEAN PATENT APPLICATION**
published in accordance with Art. 153(4) EPC

(43) Date of publication:
**18.06.2025 Bulletin 2025/25**

(21) Application number: **23885378.2**

(22) Date of filing: **11.09.2023**

(51) International Patent Classification (IPC):
**B23K 9/073** (2006.01)    **B23K 9/09** (2006.01)
**B23K 9/095** (2006.01)    **B23K 9/16** (2006.01)

(52) Cooperative Patent Classification (CPC):
**B23K 9/073; B23K 9/09; B23K 9/095; B23K 9/16**

(86) International application number:
**PCT/JP2023/033083**

(87) International publication number:
**WO 2024/095612 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.10.2022   JP 2022174337**

(71) Applicant: **JFE Steel Corporation
Tokyo 100-0011 (JP)**

(72) Inventors:
• **KONISHI Kyohei
  Tokyo 100-0011 (JP)**
• **SAWANISHI Chikaumi
  Tokyo 100-0011 (JP)**
• **TANIGUCHI Koichi
  Tokyo 100-0011 (JP)**

(74) Representative: **Haseltine Lake Kempner LLP
Bürkleinstrasse 10
80538 München (DE)**

(54)    **GAS-SHIELDED ARC WELDING METHOD AND METHOD FOR WELDED-JOINT PRODUCTION**

(57)    An object is to provide a gas-shielded arc welding method and a method for manufacturing a welded joint that can prevent the intrusion of oxygen into a weld metal without using a special device and can suppress the formation of slag, and that can stably produce welded joints with a good bead shape.

A gas-shielded arc welding method is a pulse welding in which a pulse peak current ($I_p$) and a pulse base current ($I_b$) are periodically repeated. In the gas-shielded arc welding method, the pulse peak current ($I_p$) in the pulse welding is 300 A or more and 600 A or less; the welding speed (V) is 80 cm/min or more and 200 cm/min or less; the pulse peak current ($I_p$), the pulse base current ($I_b$), a base material to contact tip distance (L), and the welding speed (V) satisfy a specific expression; and a gas containing 98 vol% or more Ar is used as a shielding gas.

FIG. 4

EP 4 570 408 A1

**Description**

Technical Field

The present invention relates to a gas-shielded arc welding method for producing a stable welded joint form while suppressing slag formation, and to a method for manufacturing a welded joint.

Background Art

In recent years, there has been a growing need for automobiles to use stronger and more rigid members in car body and structures in order to enhance the safety and reliability of the car body and structures and at the same time to use lightweight members in order to improve fuel efficiency. As a result, efforts are being made to reduce the thickness of steel sheets for such members by the use of high-strength steel sheets. Among the various members used in automobiles, in particular, suspension members (such as, for example, lower arms) are made of thick steel sheets compared to bodies from the points of view of the strength and rigidity of the members. Thus, further reduction in the weight of car body and structures will be achieved if the thickness of steel sheets used in suspension members can be further reduced by increasing the strength of the steel sheets. This will realize improved fuel efficiency while ensuring the strength and rigidity of members.

In general, members that will be used in corrosive environments are subjected to antirust treatments, such as chemical conversion treatment and electrodeposition coating, after being welded in order to ensure corrosion resistance. Unfortunately, it is often the case that the welds and the vicinities thereof are rusted or corroded over time. The corrosion that occurs in the electrodeposition-coated member tends to start at the weld. Over time, the corrosion spreads widely on the weld and its surroundings while causing blisters on the coating film, and also progresses in the thickness direction. The progress of corrosion reduces the thickness at the weld and the vicinity thereof, and consequently lowers the strength of the weld and ultimately weakens the strength of the member. That is, the occurrence and progress of corrosion in a member where a load acts on a weld (such as, for example, automobile suspension members) can lead to the destruction of the member.

Electrodeposition coating is preceded by a pretreatment for improving the adhesion between a base steel sheet including a weld metal, and an electrodeposition coating film. Specifically, electrodeposition coating is performed after a chemical conversion treatment (such as, for example, zinc phosphate treatment) is applied to the base steel sheet and the weld metal. The zinc phosphate treatment, which is a common example of the chemical conversion treatments, is a technique in which zinc phosphate crystals are grown on the surface of a base steel sheet and a weld metal to increase the adhesion of a coating film formed by electrodeposition coating. Unfortunately, even members that have been chemically converted by the conventional technique prior to electrodeposition coating frequently develop blisters on the coating film with time over a wide area on the weld and its surroundings. That is, it is difficult for the conventional chemical conversion pretreatment followed by electrodeposition coating to completely suppress the occurrence of corrosion from the weld.

When members made of steel sheets with coating layer are arc welded, the welds are subjected to high temperature by the arc plasma (hereinafter, "arc") that is the heat source, and the coating layers are vaporized to expose uncoated portions locally. As a result, a significant enhancement in corrosion resistance that will justify the use of expensive precoated steel sheets cannot be expected.

As described above, various manufacturing techniques have been developed so as to improve the corrosion resistance of members, but each has its own advantages and disadvantages. To enhance corrosion resistance while avoiding the increase in manufacturing costs, techniques have been studied that can prevent more effectively the occurrence and progress of corrosion from a weld.

It is conventionally known that corrosion of a weld starts from:

(a) slag attached to the weld (mainly the surface of the weld bead),
(b) welding fumes attached to the weld, and
(c) oxides formed on the surface of the steel sheets exposed to high temperatures by welding. In the presence of the deposits (a) and/or (b) or of the oxides (c) on the weld, chemical conversion treatment locally fails to coat the member with a chemical conversion layer of zinc phosphate crystals, and the deposits and/or the products remain on exposed regions. Such regions do not allow an electrodeposition coating film to be formed sufficiently, and the adhesion of the coating film is insufficient to cause a significant decrease in corrosion resistance. As a result, corrosion occurs and progresses and the sheet loses thickness. The techniques described below address the prevention of the occurrence of deposits (a) and (b) and of oxides (c) mentioned above.

For example, Patent Literature 1 discloses a technique in which an arc weld and the vicinity thereof, before being electrodeposition coated, are sprayed with or immersed in a non-oxidizing acidic solution with a pH of 2 or less at a liquid temperature of 30 to 90°C. This technique removes slag (a), welding fumes (b), and oxides (c) by dissolving the weld bead and the steel sheet with the non-oxidizing solution.

However, the technique disclosed in Patent Literature 1 requires rinsing of the acidic solution before electrodeposition coating, and this fact makes the member manufacturing process complicated. In addition, a member fabricated into a desired shape is a result of overlapping and joining of steel sheets having various shapes and can trap a residue of the acidic solution in gaps between the overlapped steel sheets, thus undergoing severe corrosion. Furthermore, the technique involves a large amount of the acidic solution and thus the manufacturing equipment is exposed to a corrosive environment and is easily corroded or broken down. In addition, the scattering of fumes needs to be prevented in order to ensure the safety of workers.

Patent Literature 2 discloses a technique that increases the post-coating corrosion resistance of a weld and the vicinity thereof by reducing the total amount of Si in a welding wire used in arc welding and a base material, and also by increasing the total amount of Mn in the welding wire and the base material.

However, reducing the Si content in order to suppress slag formation inevitably lowers the strength of the steel sheet. That is, the technique disclosed in Patent Literature 2 needs to use thick steel sheets in order to ensure the strength of members and will not succeed in achieving weight reduction of car body and structures.

Patent Literature 3 discloses a technique that allows a chemical conversion layer to be formed sufficiently even on a weld bead that bears slag, welding fumes, and oxides, by controlling the composition of a treatment liquid used in the chemical conversion treatment. Specifically, the formation of a chemical conversion layer is facilitated by surface-treating the steel with a surface-conditioning liquid containing colloidal zinc phosphate. Furthermore, the steel is chemically converted with a zinc phosphate treatment liquid having a F content of 100 mass ppm or more. This treatment dissolves and removes slag, welding fumes, and oxides and thereby increases the adhesion of a coating film that will be formed by electrodeposition coating.

However, the zinc phosphate treatment liquid used in the technique disclosed in Patent Literature 3 contains fluorine that is designated as a toxic substance, and the fluorine content must be lowered to a level meeting environmental standards when the liquid waste is discharged outside the factory. Thus, a large-scale liquid waste disposal facility is necessary in addition to the member manufacturing facility.

Citation List

Patent Literature

PTL 1: Japanese Unexamined Patent Application Publication No. 9-20994
PTL 2: Japanese Unexamined Patent Application Publication No. 8-33997
PTL 3: Japanese Patent No. 5549615

Summary of Invention

Technical Problem

The present invention has been made in view of the problems discussed above. It is therefore an object of the present invention to provide a gas-shielded arc welding method and a method for manufacturing a welded joint that can prevent the intrusion of oxygen into a weld metal without using a special device and can suppress the formation of slag, and that can stably produce welded joints with a good bead shape.

Solution to Problem

The present inventors have found that the most effective way to enhance the corrosion resistance of welds and to stably obtain welded joints with a good bead shape is to reduce the amount of slag that is attached to the welds and to realize periodic short-circuit transfer using pulse welding.

In order to reduce the amount of slag formed in a weld, it is important to suppress the oxidation of Si, Mn, Ti, etc. contained in the steel sheets and the welding wire. The oxidation of these elements is suppressed and the amount of slag formation can be reduced by the use of a shielding gas containing a reduced amount of an oxidizing gas. When, however, gas-shielded arc welding is performed at a welding speed of 80 to 200 cm/min in a shielding gas containing a high proportion of Ar gas, the cathode spot crawls around on the steel sheet surface after the oxide film on the steel sheet surface has been removed by the cleaning action, thus making the arc unstable. As a result, another problem occurs in which oxygen stemming from air entrainment is mixed into the molten pool or the weld bead shape is deteriorated. The present inventors have worked on these new problems and have conceived that pulse welding will reduce the crawling of the cathode spot and will realize periodic short-circuit transfer that is less susceptible to arc fluctuations. Furthermore, the present inventors have found that the quotient of the difference between the pulse peak current (Ip) and the pulse base current (Ib) in a pulse current waveform divided by the base material to contact tip distance (L) is a factor that is highly related to facilitating the occurrence of short-circuiting, and the factor should satisfy a specific relational expression with the welding speed (V) and thereby enables stable production of welded joints having a good bead shape. That is, the technique of the present invention is based on the finding that the quotient of the difference between the pulse peak current (Ip) and the pulse base current (Ib) divided by the base material to contact tip distance (L) is a factor that serves as an index of the ease of short-circuiting, and welded joints having a good bead shape can be obtained stably when this factor satisfies a specific relational expression with the welding speed (V) that varies depending on the welding speed.

The present invention is completed based on the above findings. A gist of the present invention is as follows.

[1] A gas-shielded arc welding method of forming a joint by short-circuiting a base material and a welding wire supplied with power from a contact tip in a welding torch, wherein the gas-shielded arc welding method performs pulse welding in which a pulse peak current (Ip) and a pulse base current (Ib) are periodically repeated, and the pulse peak current (Ip) in the pulse welding is 300 A or more and 600 A or less,

a welding speed (V) is 80 cm/min or more and 200 cm/min or less,
when the welding speed (V) is 80 cm/min or more and less than 120 cm/min, the pulse peak current (Ip), the pulse base current (Ib), a base material to contact tip distance (L), and the welding speed (V) satisfy expression (1) below,
when the welding speed (V) is 120 cm/min or more and 200 cm/min or less, the pulse peak current (Ip), the pulse base current (Ib), a base material to contact tip distance (L), and the welding speed (V) satisfy expression (2) below, and a gas containing 98 vol% or more Ar is used as a shielding gas,

$$0.15V - 3 \leq (Ip - Ib)/L \leq 0.1V + 38 \quad \cdots (1)$$

$$0.18V - 5 \leq (Ip - Ib)/L \leq 0.12V + 35 \quad \cdots (2)$$

wherein in expressions (1) and (2), Ip (A) is the pulse peak current, Ib (A) is the pulse base current, L (mm) is the base material to contact tip distance, and V (cm/min) is the welding speed.

[2] The gas-shielded arc welding method according to [1], wherein the pulse base current (Ib) in the pulse welding is 30 A or more and 120 A or less.
[3] A method for manufacturing a welded joint using the gas-shielded arc welding method described in [1] or [2].
Advantageous Effects of Invention

According to the present invention, welded joints with a good bead shape can be obtained stably under a wide range of welding speed conditions. Moreover, the intrusion of oxygen into the weld metal and the formation of slag can be suppressed without making special changes to the conventional welding device used in carbon dioxide gas welding, MAG welding with an inert gas-active gas mixture, or MIG welding with an inert gas-based gas.

Brief Description of Drawings

[Fig. 1] Fig. 1 is a schematic view illustrating an exemplary welded joint produced by arc welding.
[Fig. 2] Fig. 2(a) and Fig. 2(b) are schematic views illustrating droplet transfer in conventional arc welding.
[Fig. 3] Fig. 3(a) and Fig. 3(b) are schematic views illustrating short-circuit transfer according to the present invention.
[Fig. 4] Fig. 4 is a schematic diagram illustrating a pulse current waveform in arc welding according to the present invention.
[Fig. 5] Fig. 5 is a schematic view illustrating the bead area and the slag-covered area of a weld bead.
[Fig. 6] Fig. 6 is a schematic view illustrating the minimum value and the maximum value of bead width.

Description of Embodiments

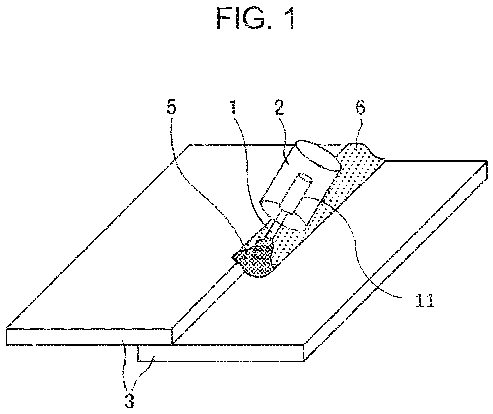

The present invention will be described in detail hereinbelow with reference to the drawings. Fig. 1 is a schematic view illustrating an exemplary welded joint produced by arc welding according to an embodiment of the present invention. While the figure illustrates fillet welding of a lap joint as a typical example, the welded joint form and the welding attitude in the present invention are not limited.

In the present invention, for example, as illustrated in Fig. 1, a welding wire 1 is continuously fed from a welding torch 2 to a base material 3 (specifically, a weld seam defined by the corner of a step formed by lapping of, for example, two sheets of the base material 3) through a central portion of the welding torch 2. The welding wire 1 is used as the anode, and the base material 3 is used as the cathode. A welding voltage is applied from a welding power supply (not shown). A contact tip 11 is attached inside the welding torch 2. The contact tip 11 serves to supply power to the welding wire 1 and guide the wire feed. Part of an Ar shielding gas (not shown) supplied from the inside of the welding torch 2 is ionized into plasma, thereby forming an arc 5 between the welding wire 1 and the base material 3. Part of the Ar shielding gas that is not ionized and flows from the welding torch 2 to the base material 3 plays a role of shielding the arc 5 and a molten pool (not shown in Fig. 1) formed by melting of the base material 3 from the outside air. The heat input from the arc 5 melts the tip of the welding wire 1 to form a droplet, and the droplet is transported to the molten pool by, for example, electromagnetic force or gravity. This phenomenon occurs continuously while the welding torch 2 or the base material 3 is moved. As a result, the molten pool behind the process along the weld seam solidifies to form a weld bead 6. In this manner, at least two steel sheets are joined together.

Extreme welding instability is encountered when carbon steel of interest in the present invention is welded by conventional MIG welding. MAG welding or MIG welding is a reversed polarity welding in which an electrode (a wire) is the anode. On the surface of a steel sheet as a base material, cathode spots are formed from regions, such as oxides, that have a low work function and easily emit electrons. For example, an aluminum alloy having a strong oxide film on the surface of the base material can be favorably welded because cathode spots are formed stably from the oxide film on the weld seam. However, steel rarely has an oxide film and therefore cathode spots are not fixed in MIG welding that does not generate oxides derived from $O_2$ or $CO_2$. Thus, the cathode spots move around on the surface of the base material vigorously in search of places where the work function is low. The welding is destabilized and the welded joint that is obtained has a meandering or wavy weld bead 6.

To address this phenomenon, the present inventors have observed the arc behavior in welding experiments and have concluded that the meandering or wavy shape of the weld bead 6 encountered in MIG welding of carbon steel is mainly attributed to unstable droplet transfer.

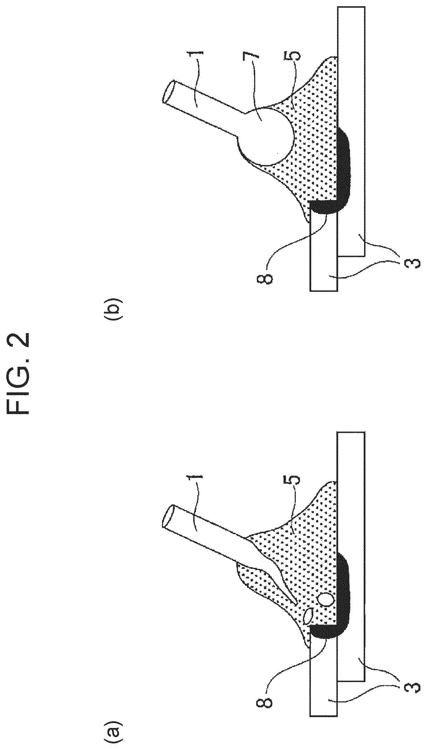

Fig. 2(a) and Fig. 2(b) are schematic views illustrating droplet transfer in conventional MIG welding. In conventional MIG welding, droplets transfer in mixed manners in which, as illustrated in Fig. 2(a), the welding wire 1 is melted and droplets are continuously transported from the long and thin liquid column to the molten pool 8. Such unstable droplet transfer will be effectively avoided by causing droplets 7 to be detached regularly from the tip of the welding wire 1. However, the electromagnetic pinching force acting on the welding wire 1 in Ar shielding gas is small, which makes the detachment of the droplets 7 difficult.

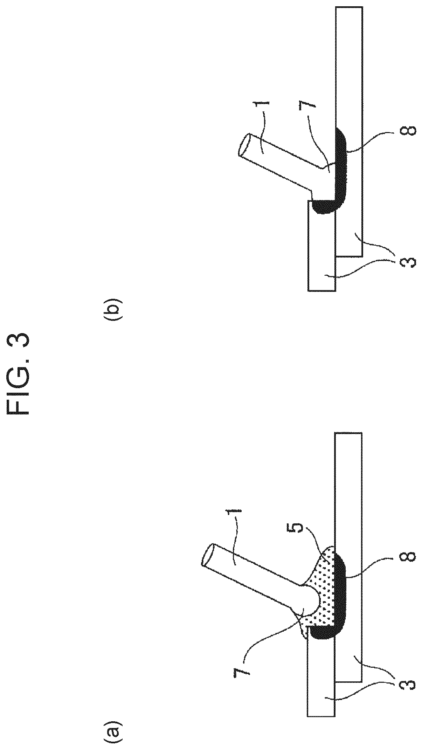

The present invention is based on the finding that droplet transfer is effectively stabilized by completing the joining by so-called periodic short-circuit transfer in which the non-short-circuited state of Fig. 3(a) and the short-circuited state of Fig. 3(b) are regularly repeated between the tip of the welding wire 1 and the base material 3, and a droplet 7 is allowed to be transferred to the base material 3 during the short-circuited state. Furthermore, the present inventors carried out further welding experiments and have found that the quotient of the difference between the pulse peak current (Ip) and the pulse base current (Ib) divided by the distance (L) between the contact tip and the base material 3 ((Ip - Ib)/L) is a factor that determines the ease of short-circuit transfer. The present inventors have found that (Ip - Ib)/L is preferably controlled to the range of 20 to 43, and the meandering of the weld bead 6 can be suppressed when this factor satisfies a specific relationship that varies depending on the welding speed.

Gas containing 98 vol% or more Ar

The amount of slag attached to the weld needs to be reduced in order to enhance the corrosion resistance of the weld. For this purpose, it is important to suppress the oxidation of Si, Mn, Ti, etc. contained in the steel sheets and the welding wire. In view of this, the shielding gas that is used needs to be a gas containing 98 vol% or more Ar. Argon is preferably contained 99 vol% or more. The upper limit is not limited, and argon may represent 100 vol%.

The pulse peak current (Ip) is 300 A or more and 600 A or less.

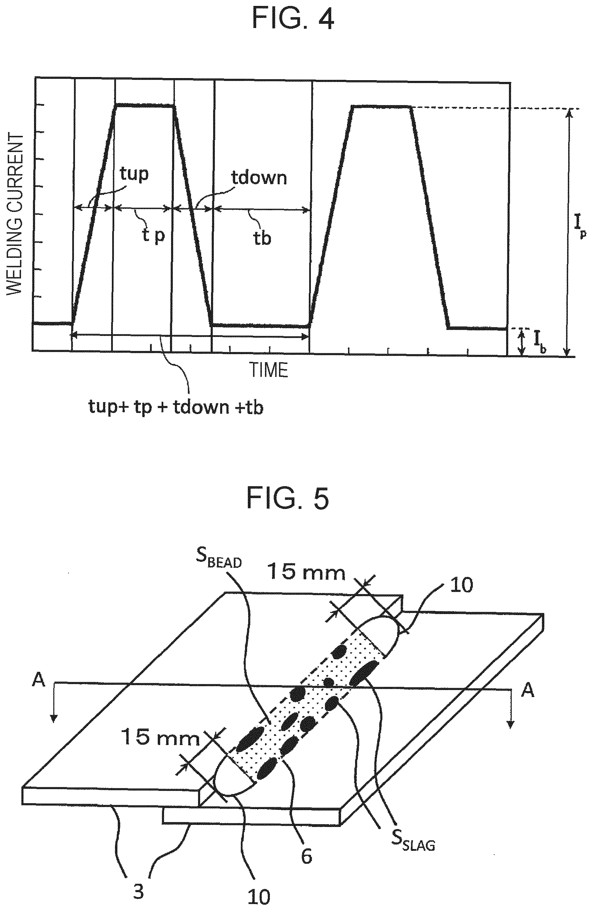

Fig. 4 illustrates a schematic diagram of a pulse current waveform in the arc welding of the present invention. Pulse welding is a method of welding in which a pulse peak current (Ip) and a pulse base current (Ib) are periodically repeated. If the pulse peak current (Ip) is excessively low, an action that pushes down the droplet 7 formed at the tip of the welding wire 1 to the molten pool 8 cannot be obtained and short-circuiting may become unstable. Furthermore, sufficient heat input cannot be ensured and the bead shape may be deteriorated. Thus, the pulse peak current (Ip) is limited to 300 A or more. The pulse peak current (Ip) is preferably 350 A or more, more preferably 380 A or more, and still more preferably 400 A or more. On the other hand, an excessively high pulse peak current causes burn-through. Furthermore, an excessively high pulse peak current causes a failure of shielding that leads to an increased amount of slag formation, or increases the amount of spatters. Thus, the pulse peak current (Ip) is limited to 600 A or less. The pulse peak current (Ip) is preferably 590 A or less, more preferably 580 A or less, and still more preferably 570 A or less. To ensure that a short-circuit occurs during the application of the pulse peak current, the pulse peak current time (tp) per cycle is preferably 0.5 ms or more. The pulse peak current time (tp) per cycle is more preferably 0.7 ms or more, and still more preferably 0.8 ms or more. If the pulse peak current time (tp) per cycle is too long, the arc 5 and the molten pool 8 are much disturbed during short-circuiting and the weld bead shape may be defective. Thus, the pulse peak current time (tp) per cycle is desirably 3.5 ms or less. The pulse peak current time (tp) per cycle is more preferably 3.3 ms or less, and still more preferably 3.2 ms or less.

The pulse base current (Ib) is 30 A or more and 120 A or less (preferred condition).

If the pulse base current (Ib) is too low, the arc discharge during the pulse base period is destabilized to cause deterioration of the bead shape, and also the weld penetration may be incomplete. Thus, the pulse base current (Ib) is preferably 30 A or more. The pulse base current (Ib) is more preferably 35 A or more, still more preferably 40 A or more, and most preferably 45 A or more. If, on the other hand, the pulse base current is excessively high, burn-through occurs and a sufficient difference between the pulse peak current (Ip) and the pulse base current (Ib) cannot be ensured, with the result that a short-circuiting action that pushes down the droplet 7 formed at the tip of the welding wire 1 to the molten pool 8 cannot be obtained sufficiently and welding may become unstable. Thus, the pulse base current (Ib) is preferably 120 A or less. The pulse base current (Ib) is more preferably 110 A or less, still more preferably 100 A or less, and most preferably 90 A or less.

If the pulse base current time (tb) is too short, the droplet 7 cannot grow to an ideal size and periodic short-circuiting may not be realized. Thus, the pulse base current time (tb) per cycle (per pulse cycle) is preferably 1.0 ms or more. The pulse base current time (tb) per cycle (per pulse cycle) is more preferably 1.5 ms or more, and still more preferably 2.0 ms or more. If the pulse base current time (tb) is too long, short-circuiting may not be controlled as intended in the pulse peak period, or the arc 5 and the molten pool 8 may be significantly disturbed during short-circuiting. Thus, the pulse base current time (tb) per cycle is preferably 10.0 ms or less. The pulse base current time (tb) per cycle is more preferably 9.0 ms or less, and still more preferably 8.0 ms or less.

Shortness of the rise-up time (tup) and the fall-down time (tdown) induces fluctuations of the arc 5, and extensiveness thereof leads to deterioration of bead shape. Thus, the rise-up time (tup) is preferably 0.1 ms or more, more preferably 0.3 ms or more, and still more preferably 0.5 ms or more. The rise-up time (tup) is preferably 3.0 ms or less, more preferably 2.8 ms or less, and still more preferably 2.5 ms or less. The fall-down time (tdown) is preferably 0.1 ms or more, more preferably 0.3 ms or more, and still more preferably 0.5 ms or more. The fall-down time (tdown) is preferably 3.0 ms or less, more preferably 2.8 ms or less, and still more preferably 2.5 ms or less.

The welding speed (V) is 80 cm/min or more and 200 cm/min or less.

An increase in welding speed (V) lowers the stability of the arc 5 and makes it difficult to control periodic short-circuit transfer. The above phenomenon is particularly noticeable under welding conditions where the welding speed is 80 cm/min or more, and thus the welding speed needs to be limited to the range described below. On the other hand, welding under conditions where the welding speed (V) is more than 200 cm/min encounters difficulties in achieving a desired weld bead shape and a desired penetration shape, or such welding is accompanied by disturbance of the arc 5 that causes air entrainment and may result in slag formation. Thus, the welding speed (V) of interest in the present invention is 80 cm/min or more and 200 cm/min or less.

The factor (Ip - Ib)/L, which is the quotient of the difference between the pulse peak current (Ip) and the pulse base current (Ib) divided by the distance (L) between the base material 3 and the contact tip 11, is not particularly limited. This factor found in the present invention is an index of the ease of short-circuit transfer and is an important feature of the present invention. If (Ip - Ib)/L is excessively small, short-circuit transfer is unlikely to occur or, even if short-circuit transfer occurs, will be unstable and give a faulty bead shape. Thus, (Ip - Ib)/L is preferably controlled to 20 A/mm or more, and is more preferably 22 A/ms or more, and still more preferably 25 A/ms or more. If, on the other hand, (Ip - Ib)/L is excessively large, pulsing produces small droplets 7 but excessively increases the number of re-ignition of the arc 5 after short-circuiting, thus destabilizing the arc 5. Thus, (Ip - Ib)/L is preferably controlled to 43 A/mm or less, and is more preferably 41 A/ms or less, and still more preferably 40 A/ms or less.

The pulse peak current (Ip), the pulse base current (Ib), the base material to contact tip distance (L), and the welding speed (V) satisfy expressions (1) and (2) below:

$$0.15V - 3 \leq (Ip - Ib)/L \leq 0.1V + 38 \text{ (when the welding speed V is 80 cm/min or more and less than 120 cm/min)} \quad (1)$$

$$0.18V - 5 \leq (Ip - Ib)/L \leq 0.12V + 35 \text{ (when the welding speed V is 120 cm/min or more and 200 cm/min or less)} \quad (2)$$

In expressions (1) and (2), Ip (A) is the pulse peak current, Ib (A) is the pulse base current, L (mm) is the base material to contact tip distance, and V (cm/min) is the welding speed.

In order to realize periodic short-circuit transfer in a gas-shielded arc welding method in which the proportion of Ar is high, the difference between the pulse peak current (Ip) and the pulse base current (Ib), and the distance (L) between the base material 3 and the contact tip 11 need to be in the ranges satisfying expressions (1) and (2). When the welding speed V is 80 cm/min or more and less than 120 cm/min, a failure for (Ip - Ib)/L to be equal to or greater than 0.15V - 3 makes it difficult to realize short-circuit transfer that is free from the influence of the fluctuation of the arc 5. Thus, this ratio needs to be equal to or greater than 0.15V - 3, and is preferably equal to or greater than 0.15V - 2, and more preferably equal to or greater than 0.15V - 1. If, on the other hand, the ratio is more than 0.1V + 38, the arc 5 and the molten pool 8 are much disturbed during short-circuiting and the weld bead shape may be defective. Thus, the ratio needs to be equal to or less than 0.1V + 38, and is preferably equal to or less than 0.1V + 36, and more preferably equal to or less than 0.1V + 34. When the welding speed V is 120 cm/min or more and 200 cm/min or less, a failure for (Ip - Ib)/L to be equal to or greater than 0.18V - 5 makes it difficult to realize short-circuit transfer that is free from the influence of the fluctuation of the arc 5. Thus, this ratio needs to be equal to or greater than 0.18V - 5, and is preferably equal to or greater than 0.18V - 4, and more preferably equal to or greater than 0.18V - 3. If, on the other hand, the ratio is more than 0.12V + 35, the arc 5 and the molten pool 8 are much disturbed during short-circuiting and the weld bead shape may be defective. Thus, the ratio needs to be equal to or less than 0.12V + 35, and is preferably equal to or less than 0.12V + 33, and more preferably equal to or less than 0.12V + 31.

The arc 5 is more prone to destabilization when the welding speed V is 120 cm/min or more and 200 cm/min or less. Under such high-speed conditions, it is effective to increase the slope of (Ip - Ib)/L relative to V compared to when the welding speed is 80 cm/min or more and less than 120 cm/min.

The average frequency of short-circuit transfers (the short-circuit frequency) F (Hz) that affects the volume of the droplet 7 at the tip of the wire is not particularly limited but is preferably 20 Hz or more, more preferably 30 Hz or more, and still more preferably 40 Hz or more. The upper limit is preferably 200 Hz or less, more preferably 180 Hz or less, and still more preferably 150 Hz or less. For example, the average frequency of short-circuit transfers (the short-circuit frequency) F (Hz) can be measured by monitoring the arc voltage during welding with an oscilloscope to count the number of times the arc voltage becomes zero, and dividing the count by the monitoring time to calculate the number of counts per second. If the monitoring time is too short, the difference in count will be large. Thus, the monitoring time is preferably 0.5 s or more, more preferably 0.8 s or more, and still more preferably 1.0 s or more. On the other hand, the upper limit is not particularly limited but is preferably 3.0 s or less because the count processing time is extended with increasing volume of measurement data and thus workability is lowered. For example, one of the reasons for the above is that when the short-circuit frequency is measured in-process and the welding conditions are feedback controlled, an excessively long monitoring time makes it difficult to perform instantaneous feedback control depending on the welding situation.

For example, preferred welding conditions are such that the welding current is 150 A to 300 A, the arc voltage is 20 V to 35 V, the distance between the base material 3 and the contact tip 11 is 5 mm to 30 mm, and the Ar shielding gas flow rate is 10 L/min to 25 L/min. Specifically, the welding current is preferably 150 A or more, more preferably 170 A or more, and still more preferably 180 A or more. Regarding the upper limit, the welding current is preferably 300 A or less, more preferably 280 A or less, and still more preferably 270 A or less. The arc voltage is preferably 20 V or more, more preferably 21 V or more, and still more preferably 22 V or more. Regarding the upper limit, the arc voltage is preferably 35 V or less, more preferably 32 V or less, and still more preferably 30 V or less. The distance between the base material 3 and the contact tip 11 is preferably 5 mm or more, more preferably 8 mm or more, and still more preferably 10 mm or more. The distance between the base material 3 and the contact tip 11 is preferably 30 mm or less, more preferably 25 mm or less, and still more preferably 20 mm or less. The Ar shielding gas flow rate is preferably 10 L/min or more, more preferably 12 L/min or more, and still more preferably 15 L/min or more. The Ar shielding gas flow rate is preferably 25 L/min or less, more preferably 24 L/min or less, and still more preferably 22 L/min or less. The welding current and the arc voltage are the averages in each welding pass. More specifically, the welding current is the average of the pulse peak current and the pulse base current. Control of this makes it possible to grasp the total heat input during welding.

The welding wire 1 used in the present invention is not particularly limited. For example, solid wires, such as YGW12 and YGW16 described in JIS Z 3312, may be used.

The base materials 3 of interest in the present invention are steel sheets and coated steel sheets. The chemical composition of the steel sheets is not limited.
For example, the steel sheets preferably contain C: 0.02 mass% to 0.3 mass%, Si: 0.01 mass% or more, Mn: 0.5% mass% or more, P: 0.05 mass% or less, and S: 0.05 mass% or less, and may further contain alloying elements, such as Cu, Ni, Cr, and Ti. In the above steel sheets, the Si content is preferably 3.0 mass% or less, and the Mn content is preferably 5.0 mass% or less. The lower limit of P is not particularly limited, but is preferably 0.0005 mass% or more. The lower limit of S is not particularly limited, but is preferably 0.0005 mass% or more. The coating composition in the coated steel sheets is not particularly limited. For example, the coating may be Zn.

The above limitations enable the manufacturing of a welded joint with a good bead shape while suppressing the formation of slag in the weld, making it possible to obtain such a welded joint. The amount of slag formation was evaluated by the method described in Examples. Furthermore, a new technical idea of the present invention resides in the finding that the quotient of the difference between the pulse peak current (Ip) and the pulse base current (Ib) divided by the distance (L) between the base material 3 and the contact tip 11 is a factor that determines the ease of short-circuiting in the control of bead shape, and combining this index with the welding speed is a very effective tool for controlling the bead shape.

In addition to the above, the present invention is also advantageously characterized by its high robustness. High robustness means that the inventive technique is less susceptible to disturbances, such as environment and sheet shape, and has a wide range of appropriate welding conditions.

EXAMPLES

Hereinbelow, Examples of the present invention will be described. Two steel sheets (both 2.6 mm thick) having a chemical composition described in Table 1 were lapped and were fillet welded by an exemplary method illustrated in Fig. 1. In addition to the components described in Table 1, the steel sheets contained Fe and alloying elements, such as Cu, Ni, Cr, and Ti. The welding was performed under the welding conditions described in Table 2. YGW16 specified in JIS Z 3312 was used as the welding wire 1.

The welded steel sheets obtained as described above were tested by the following methods to evaluate the slab-covered area ratio and the bead width ratio.

(Slag-covered area ratio)

Fig. 5 is a schematic view illustrating the bead area and the slag-covered area of a weld bead. The surface of the weld bead 6 excluding the bead-start and bead-finish end portions 10 (each 15 mm long) is photographed from directly above, and the projected areas from above of the weld bead 6 and the slag are measured to calculate the bead surface area $S_{BEAD}$ and the slag-covered surface area $S_{SLAG}$ illustrated in Fig. 5. When the length of the weld bead 6 is less than 130 mm, the surface over the entire length excluding the bead-start and bead-finish end portions 10 is photographed. When the length of the weld bead 6 is 130 mm or more, the surface of a randomly selected region (100 mm in length) excluding the bead-start and bead-finish end portions 10 is photographed. The value of the slag surface area $S_{SLAG}$ was divided by the value of the bead surface area $S_{BEAD}$ to give the slag-covered area ratio $S_{RATIO}$. $S_{RATIO}$ of 30% or less was acceptable.

(Bead width ratio)

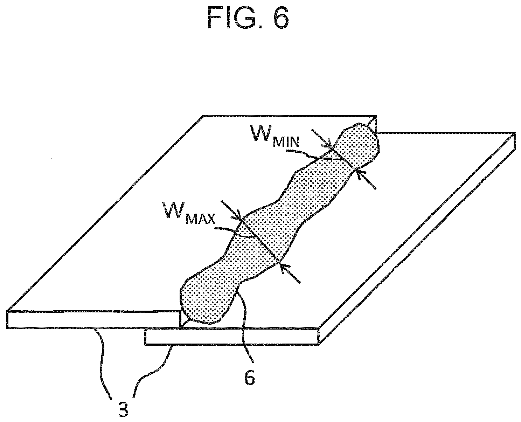

Fig. 6 is a schematic view illustrating the minimum value and the maximum value of bead width. The maximum value $W_{MAX}$ and the minimum value $W_{MIN}$ of the width of a bead similar to that illustrated in Fig. 6 were determined as follows. The surface of the weld bead 6 excluding the bead-start and bead-finish end portions 10 (each 15 mm long) was photographed, and the photograph was analyzed. When the length of the weld bead 6 was less than 130 mm, the surface over the entire length excluding the bead-start and bead-finish end portions 10 was photographed. When the length of the weld bead 6 was 130 mm or more, the surface of a randomly selected region (100 mm in length) excluding the bead-start and bead-finish end portions 10 was photographed. The bead widths were calculated, and the minimum value $W_{min}$ was divided by the maximum value $W_{max}$ to determine the bead width ratio $W_{RATIO}$. $W_{RATIO}$ of 60% or more was acceptable.

From Table 2, the welding conditions Nos. 1 to 7, 15, and 16 representing Inventive Examples satisfied 30% or less $S_{RATIO}$ and 60% or more $W_{RATIO}$, and afforded a stable welded joint form while suppressing slag.

Of Inventive Examples, the welding conditions Nos. 1 to 5 achieved 80% or more $W_{RATIO}$, and afforded a more stable welded joint form.

In contrast, the welding conditions Nos. 8 to 14 representing Comparative Examples did not satisfy any one of 30% or less $S_{RATIO}$ and 60% or more $W_{RATIO}$, and failed to suppress slag formation and did not afford satisfactory weld beads.

In Table 2, the steel sheets were rated as A (superior) when "$S_{RATIO}$ was 30% or less and $W_{RATIO}$ was 80% or more", as B (excellent) when "$S_{RATIO}$ was 30% or less and $W_{RATIO}$ was 60% or more and less than 80%", and as F (fail) when "$S_{RATIO}$ was more than 30% or $W_{RATIO}$ was less than 60%".

[Table 1]

| Chemical composition of steel sheets (mass%) | | | | |
|---|---|---|---|---|
| C | Si | Mn | P | S |
| 0.060 | 0.71 | 1.80 | 0.006 | 0.001 |

[Table 2]

| Welding conditions Nos. | Shielding gas | Tip-base material distance (mm) | Welding current (A) | Arc voltage (V) | Pulse peak current (A) | Pulse base current (A) | Pulse peak current time (ms) | Pulse base current time (ms) | Rise-up time (ms) | Fall-down time (ms) | Welding speed (cm/min) | Short-circuit frequency (Hz) | (Ip-Ib)/L (A/mm) | Exp. (1) | Exp. (2) | $S_{RATIO}$ (%) | $W_{RATIO}$ (%) | Rating | Remarks |
|---|---|---|---|---|---|---|---|---|---|---|---|---|---|---|---|---|---|---|---|
| 1 | 100%Ar | 12 | 214 | 24.3 | 500 | 50 | 2.5 | 5.1 | 1.0 | 1.0 | 80 | 119 | 37.5 | ○ | - | 2 | 83 | A | Inv. Ex. |
| 2 | 100%Ar | 15 | 210 | 20.1 | 450 | 50 | 1.5 | 2.8 | 1.0 | 1.0 | 90 | 91 | 26.7 | ○ | - | 4 | 84 | A | Inv. Ex. |
| 3 | 98%Ar+ 2%$CO_2$ | 15 | 199 | 23.4 | 450 | 50 | 2.5 | 4.9 | 1.0 | 1.0 | 90 | 32 | 26.7 | ○ | - | 21 | 96 | A | Inv. Ex. |
| 4 | 100%Ar | 12 | 223 | 241 | 600 | 120 | 1.0 | 6.3 | 1.0 | 1.0 | 100 | 155 | 40.0 | ○ | - | 3 | 81 | A | Inv. Ex. |
| 5 | 100%Ar | 8 | 191 | 23.8 | 300 | 40 | 1.5 | 2.0 | 0.5 | 0.5 | 180 | 100 | 32.5 | - | ○ | 2 | 82 | A | Inv. Ex. |
| 6 | 100%Ar | 20 | 209 | 258 | 350 | 20 | 3.0 | 2.1 | 0.5 | 0.5 | 100 | 30 | 16.5 | ○ | - | 8 | 61 | B | Inv. Ex. |
| 7 | 100%Ar | 15 | 228 | 228 | 400 | 130 | 1.5 | 4.1 | 2.0 | 2.0 | 120 | 33 | 18.0 | - | ○ | 6 | 66 | B | Inv. Ex. |
| 8 | 95%Ar+ 5%$CO_2$ | 10 | 192 | 227 | 450 | 50 | 1.5 | 3.5 | 1.0 | 1.0 | 180 | - | 40.0 | - | ○ | 31 | 91 | F | Comp. Ex. |
| 9 | 100%Ar | 15 | 241 | 219 | 650 | 50 | 1.5 | 4.4 | 1.0 | 1.0 | 100 | 109 | 40.0 | ○ | - | 4 | 54 | F | Comp. Ex. |
| 10 | 100%Ar | 15 | 182 | 18.6 | 250 | 80 | 1.5 | 0.8 | 0.5 | 0.5 | 100 | 19 | 11.3 | × | - | 12 | 52 | F | Comp. Ex. |
| 11 | 100%Ar | 10 | 224 | 241 | 550 | 80 | 1.5 | 47 | 1.0 | 1.0 | 80 | 133 | 47.0 | × | - | 2 | 55 | F | Comp. Ex. |
| 12 | 100%Ar | 15 | 211 | 217 | 350 | 50 | 1.5 | 1.2 | 1.0 | 1.0 | 180 | 94 | 20.0 | - | × | 3 | 52 | F | Comp. Ex. |
| 13 | 100%Ar | 15 | 205 | 251 | 300 | 130 | 1.5 | 2.2 | 1.0 | 1.0 | 100 | 28 | 11.3 | × | - | 19 | 51 | F | Comp. Ex. |
| 14 | 100%Ar | 8 | 214 | 271 | 550 | 80 | 1.5 | 5.3 | 1.0 | 1.0 | 180 | 162 | 58.8 | - | × | 11 | 57 | F | Comp. Ex. |
| 15 | 100%Ar | 10 | 220 | 24.3 | 500 | 50 | 1.5 | 3.1 | 1.0 | 1.0 | 90 | 124 | 45.0 | ○ | - | 9 | 74 | B | Inv. Ex. |
| 16 | 100%Ar | 10 | 218 | 229 | 600 | 80 | 1.5 | 5.9 | 1.0 | 1.0 | 150 | 139 | 52.0 | - | ○ | 16 | 69 | B | Inv. Ex. |

○: Satisfied. ×: Failed.

EP 4 570 408 A1

9

Reference Signs List

1 WELDING WIRE
2 WELDING TORCH
3 BASE MATERIAL
5 ARC
6 WELD BEAD
7 DROPLET
8 MOLTEN POOL
10 BEAD-START AND BEAD-FINISH END PORTIONS
11 CONTACT TIP
tup RISE-UP TIME
tp PULSE PEAK CURRENT TIME
tdown FALL-DOWN TIME
tb PULSE BASE CURRENT TIME
tup + tp + tdown + tb ONE PULSE PERIOD
$S_{BEAD}$ BEAD SURFACE AREA
$S_{SLAG}$ SLAG-COVERED SURFACE AREA
$W_{MAX}$ MAXIMUM VALUE OF BEAD WIDTH
$W_{min}$ MINIMUM VALUE OF BEAD WIDTH

**Claims**

1. A gas-shielded arc welding method of forming a joint by short-circuiting a base material and a welding wire supplied with power from a contact tip in a welding torch, wherein the gas-shielded arc welding method performs pulse welding in which a pulse peak current (Ip) and a pulse base current (Ib) are periodically repeated, and the pulse peak current (Ip) in the pulse welding is 300 A or more and 600 A or less,

   a welding speed (V) is 80 cm/min or more and 200 cm/min or less,
   when the welding speed (V) is 80 cm/min or more and less than 120 cm/min, the pulse peak current (Ip), the pulse base current (Ib), a base material to contact tip distance (L), and the welding speed (V) satisfy expression (1) below,
   when the welding speed (V) is 120 cm/min or more and 200 cm/min or less, the pulse peak current (Ip), the pulse base current (Ib), a base material to contact tip distance (L), and the welding speed (V) satisfy expression (2) below, and a gas containing 98 vol% or more Ar is used as a shielding gas,

$$0.15V - 3 \leq (Ip - Ib)/L \leq 0.1V + 38 \quad \cdots (1)$$

$$0.18V - 5 \leq (Ip - Ib)/L \leq 0.12V + 35 \quad \cdots (2)$$

   wherein in expressions (1) and (2), Ip (A) is the pulse peak current, Ib (A) is the pulse base current, L (mm) is the base material to contact tip distance, and V (cm/min) is the welding speed.

2. The gas-shielded arc welding method according to claim 1, wherein the pulse base current (Ib) in the pulse welding is 30 A or more and 120 A or less.

3. A method for manufacturing a welded joint using the gas-shielded arc welding method described in claim 1 or 2.

# FIG. 1

FIG. 2

# FIG. 3

(a)

(b)

# FIG. 4

# FIG. 5

# FIG. 6

# EP 4 570 408 A1

<table>
<tr><td colspan="2" align="center">**INTERNATIONAL SEARCH REPORT**</td><td>International application No.<br>**PCT/JP2023/033083**</td></tr>
</table>

**A. CLASSIFICATION OF SUBJECT MATTER**

$\textbf{\textit{B23K 9/073}}$(2006.01)i; $\textbf{\textit{B23K 9/09}}$(2006.01)i; $\textbf{\textit{B23K 9/095}}$(2006.01)i; $\textbf{\textit{B23K 9/16}}$(2006.01)i
FI: B23K9/073 545; B23K9/09; B23K9/095 501A; B23K9/16 J

According to International Patent Classification (IPC) or to both national classification and IPC

**B. FIELDS SEARCHED**

Minimum documentation searched (classification system followed by classification symbols)

B23K9/073; B23K9/09; B23K9/095; B23K9/16

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2021/085544 A1 (JFE STEEL CORP.) 06 May 2021 (2021-05-06)<br>entire text, all drawings | 1-3 |
| A | WO 2021/210335 A1 (JFE STEEL CORP.) 21 October 2021 (2021-10-21)<br>entire text, all drawings | 1-3 |
| A | JP 09-085443 A (TOYOTA AUTOM. LOOM WORKS, LTD.) 31 March 1997 (1997-03-31)<br>entire text, all drawings | 1-3 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **26 October 2023** | **07 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/033083**

| Patent document cited in search report | | | Publication date (day/month/year) | Patent family member(s) | | | Publication date (day/month/year) |
|---|---|---|---|---|---|---|---|
| WO | 2021/085544 | A1 | 06 May 2021 | US 2022/0402078 A1 entire text, all drawings EP 4052834 A1 CN 114616068 A KR 10-2022-0066379 A | | | |
| WO | 2021/210335 | A1 | 21 October 2021 | US 2023/0132518 A1 entire text, all drawings EP 4137260 A1 KR 10-2022-0148285 A CN 115427179 A | | | |
| JP | 09-085443 | A | 31 March 1997 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9020994 A
- JP 8033997 A
- JP 5549615 B